# EUROPEAN PATENT APPLICATION

(11) **EP 0 875 868 A2**
(43) Date of publication of application: **04.11.1998**
(21) Application number: 98103815.1
(22) Date of filing: 04.03.1998
(51) Int. Cl.: G07F 7/10

(54) **Key management system for use with smart cards**

(30) Priority: 07.03.1997 US 810057
(71) Applicant: PITNEY BOWES INC., Stamford Connecticut 06926-0700 (US)
(72) Inventor: Scolnick, Melvin J., Westport, Connecticut 06881 (US)
(74) Representative: Avery, Stephen John

(57) **Abstract**

The present invention implements a key management system to preclude use of a smart card by a wrongful individual or unauthorized terminal by storing the security parameters in an encrypted file on the smart card. The key to the file (known as the file decryption key) is not stored on the card; instead it is generated and stored in a remote data center which is only accessible by an authorized user.

## Description

The invention relates generally to a system and method for retrieving stored personal information from "Smart Cards", and more particularly to means for securing such cards to preclude unauthorized use.

There is a continuing need to take bundles of information that bombard today's hospital patients, business concerns and consumers and provide ways for more efficient organization thereof. The continuing evolution of computer based technologies allows consumers and business concerns to use/employ wallet sized credit cards that can hold diverse individual information. Such cards have come to be known as "smart cards."

For instance, areas of individuated informational importance capable of being stored on a smart card include personal data such as name, date and place of birth, height, Social Security Number, drivers license information, passport number, and address. A smart card may also contain the health history of the owner combined with information about medical treatments, surgeries, vaccinations, allergies, anomalies, blood type, rh factor, etc. Additionally, a smart card may contain information including but not limited to the medical/finance credit worthiness of a consumer, commercial inventory data, automotive service history and military, academic, insurance and employment records.

Conventionally, smart cards store data in a mechanism of storage typically involving a small computer chip containing non-volatile memory to store the information. Specialized equipment is necessary to read and write information onto the chip. It is to be appreciated that other recently developed systems exist for storing information directly onto a smart card such as optically storing data on a card or embedding encoded information onto a smart card in alphanumeric form, which information is retrieved by means of an optical scanner.

A major concern regarding smarts cards is their security. Obviously unauthorized retrieval of all, or a portion of, the stored personal information needs to be prevented since sensitive or even secret data is often associated with the card. In order to forestall such unauthorized use, it is common to associate with each individual card a parameter known as a Personal Identification Number, or PIN, known only by authorized parties (usually the card's intended user and the issuer of the card). Commonly, when the card is used, the user is prompted by the host device for the user's PIN. A method is used which compares the number entered by the user to the PIN associated with the card. If the method does not produce the positive result, then the user is denied access to the services normally provided by use of the card.

In the prior art, as exemplified by cards used with automatic teller machines, the user is assumed to not have access to the mechanism in the host device or network which verifies the PIN. However, there are many new applications of cards for which this assumption is inappropriate. For instance, a card may be used to provide a digital signature on a document that is produced on a personal computer that is owned by and could be modified or even designed by the user of the card. If an intruder should gain access to the card, the intruder could copy its content, return the card surreptitiously to the rightful owner, and then use specialized "PIN cracking" algorithms on the card copy using his own computer in order to discover the PIN that unlocks the signature mechanism. From then on, the intruder can use the copy. Since the intruder has control of the host, it is possible for the intruder to program the host to try millions of different PIN's per second. In most cases the PIN will be discovered in a few seconds. If we assume the intruder has access to the internals of the card copy, the intruder can disable any self-destruction mechanism the card may employ.

Another drawback associated with PIN protected cards is that the user obviously has to memorize the password, and in the event it is forgotten, the card may not be used until the password is retrieved or changed. Additionally, retrieval of information associated with a smart card may be needed when the owner of the card is unable to provide the password. For instance, it may be critically important for medical personnel to gain immediate access to a patient's medical file history. Medical history pertaining to allergies, chronic diseases and blood conditions often must be learned before any treatment can begin so that treatment which would have a deleterious effect due to a presently existing chronic condition of the patient would not be initiated. This information must often be gained without the help of the patient and is therefore difficult to obtain quickly when only the identification of the patient can be ascertained from the face of a drivers license or similar identification.

Therefore, it is an object of the present invention to provide an improved data retrieval system for accessing personal information stored on a smart card.

Another object of the present invention is to provide an improved data retrieval system that prevents unauthorized retrieval of personal information stored on a smart card.

The present invention precludes use of a smart card by a wrongful individual or unauthorized terminal by storing the security parameters in an encrypted file on the smart card. The key to the file (known as the file decryption key) is not stored on the card; instead it is generated and stored in a remote data center which is only accessible by an authorized user.

The system of the present invention includes a smart card configured to have a storage medium provided with at least one data file. A variable encryption code is embedded in the at least one data file of the smart card so as to preclude unauthorized access to the data file of the smart card. In order to gain authorized access to the data file of the smart card, the present invention system includes at least one information terminal configured for reception of the smart card, which information terminal is configured to electronically communicate with a remote data center.

The remote data center is provided with a computer processor having a storage medium that includes a file decryption key capable of deciphering the variable encryption code embedded in the data file of the smart card. The data center is adapted to electronically transmit the file decryption key to the smart card when the smart card is received in the information terminal and the information terminal is electronically connected to the data center. After the file decryption key is transmitted to the smart card, the file decryption key deciphers the variable encryption code and enables the information terminal to access stored data in the at least one data file of the smart card. Upon termination of data access to the data file of the smart card, a new variable encryption code is embedded in the data file to preclude future unauthorized use of the smart card.

The above and other objects and advantages of the present invention will become more readily apparent upon consideration of the following detailed description of preferred embodiments, taken in conjunction with accompanying drawings, in which like reference characters refer to like parts throughout the drawings and in which:
- Fig 1: is a block diagram embodying one embodiment of the system of the present invention;
- Fig.2: is a flow chart depicting the method of use of the system of Fig. 1;
- Fig.3: is a block diagram depicting another preferred embodiment of the system of the present invention; and
- Fig. 4: is a flow chart depicting the method of use of the system of Fig. 3.

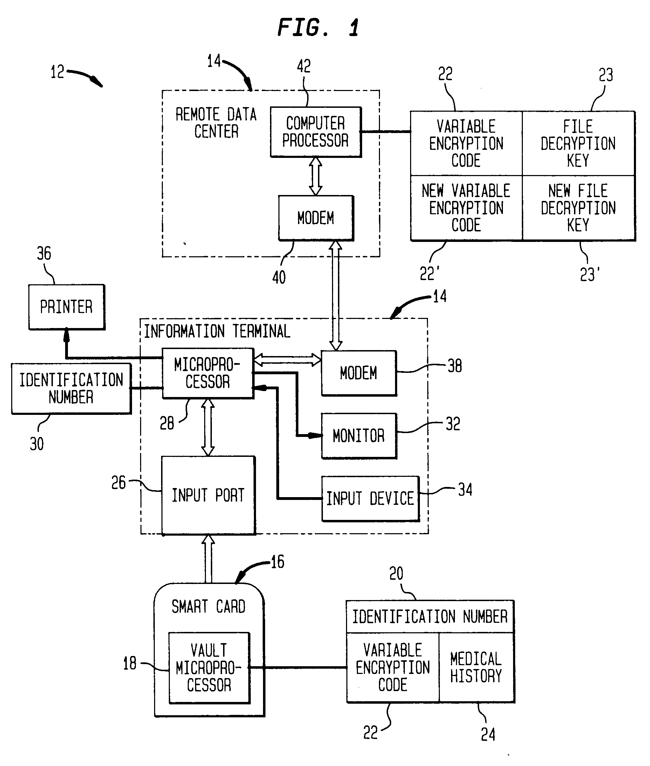

In FIG. 1, there is shown generally at 10 one embodiment of an overall system in accordance with the invention. In the embodiment illustrated, the system 10 comprises a remote data center 12 and a data terminal 14 configured to receive a smart card 16. System 10 is operational to enable data terminal 14 to access data stored on smart card 16 after a successful verification process, via remote data center 12. As will be described further below, the verification process utilizes an encryption Key Management System, an example of which can be found in U.S. Pat. No. 5,390,251, assigned to the assignee of the present invention and which is incorporated by reference herein.

Smart card 16 is preferably a wallet-sized credit card that can hold diverse individual information. A vault microprocessor 18 is positioned on smart card 16, which microprocessor 18 includes associated software and memory storage, as is conventional. Vault microprocessor 18 also has associated with it an identification number 20 and a data file 24 having an embedded variable file encryption code 22. The identification number 20 is unique to card 16. As will be described in more detail below, the variable file encryption code 22 is a component of a Key Management System and is essentially a computer encryption scheme that prevents access to the data stored in the data file 24 of smart card 16 in the absence of the proper deciphering decryption scheme (the file decryption key 23). As will be described in more detail below, the file decryption key 23 is essentially an algorithm that decrypts (deciphers) the encryption scheme established by the embedded variable file encryption code 22 enabling electronic access to the data stored in the data file 24 of card 16.

In the illustrative embodiment of FIG. 1, smart card 16 is preferably implemented on an identification card, such as a driver's license, and has stored within its vault microprocessor 18 data (e.g., address, medical history, birthday, phone number, etc.) pertaining to owner of the card 16. As is conventional, vault microprocessor 18 includes data terminals (not shown) for enabling electronic communication with a data terminal (not shown) provided in information terminal 14. It is to be appreciated that card 16 is not to be understood to be limited to a state' s driver license as it may be implemented with any type of identification card, such as a Social Security card, employment identification card, etc. Furthermore, and as discussed further below, it is of course to be appreciated that card 16 is not to be understood to be limited to only the general personal information listed above but rather may include any type of suitable information thereon.

The information terminal 14 of system 10 is preferably a self-contained apparatus which will access the information stored on smart card 16. Information terminal 14 includes an input port 26 configured for reception of smart card 16. Input port 26 includes a data terminal (not shown) operative to electrically connect with the aforementioned data terminal of vault microprocessor 18. A microprocessor 28 is electrically connected to input port 26 which microprocessor 28 includes associated software and memory storage, as is conventional. Microprocessor 28 also has associated with it an identification number 30 which is used to identify information terminal 14 to remote data center 12, as discussed further below. Information terminal 14 preferably includes a video monitor 32 electrically connected to microprocessor 28, which monitor 32 may either be integrally provided on terminal 14 or externally connected thereto. Further, a conventional input device 34 (e.g., an ASCII keyboard) is electrically connected to microprocessor 28 for permitting a user to input data to microprocessor 28. As will be discussed further below, input device 34 enables a user to alter (e.g., update) the information stored in the data file 24 of smart card 16. Additionally, a conventional printer 36 may be electrically connected to microprocessor 28 for printing data from information terminal 14.

A modem 38 is provided in information terminal 14, which is used to establish data communication with remote data center 12 using conventional modem techniques. Modem 38 is connected with microprocessor 28 enabling two-way data transfer between microprocessor 28 and the computer processor 42 of remote data center 12.

The remote data center 12 is preferably a remote vendor data center that provides physical and information access control for the key management system components of the present invention system 10. Remote data center 12 includes a conventional modem 40 connected to a computer processor 42 (e.g., a microprocessor). Computer processor 42 includes associated software and memory. As will be discussed below, remote data center 12 is able to authenticate and identify each data terminal 14 and smart card 16 associated with system 10 through interrogation of their respective identification number 20, 30. After the authentication process is successfully completed, remote data center 12 transfers the proper file decryption key 23 to information terminal 14 so as to decipher the variable file encryption code 22 embedded in the data file 24 of smart card 16. The remote data center 12 also assigns and transfers a new variable file encryption code 22' to replace the prior variable file encryption code 22, which new variable file encryption code 22' has a unique encryption algorithm. Thus, future access to the information contained in smart card 16 requires a different and unique file decryption key 23', which file decryption key is only contained in remote data center 12. Therefore, system 10 provides a secure environment of use for smart card 16, since each time smart card 16 is used, access thereto requires a different file decryption key, which file decryption key is securely maintained in remote data center 12.

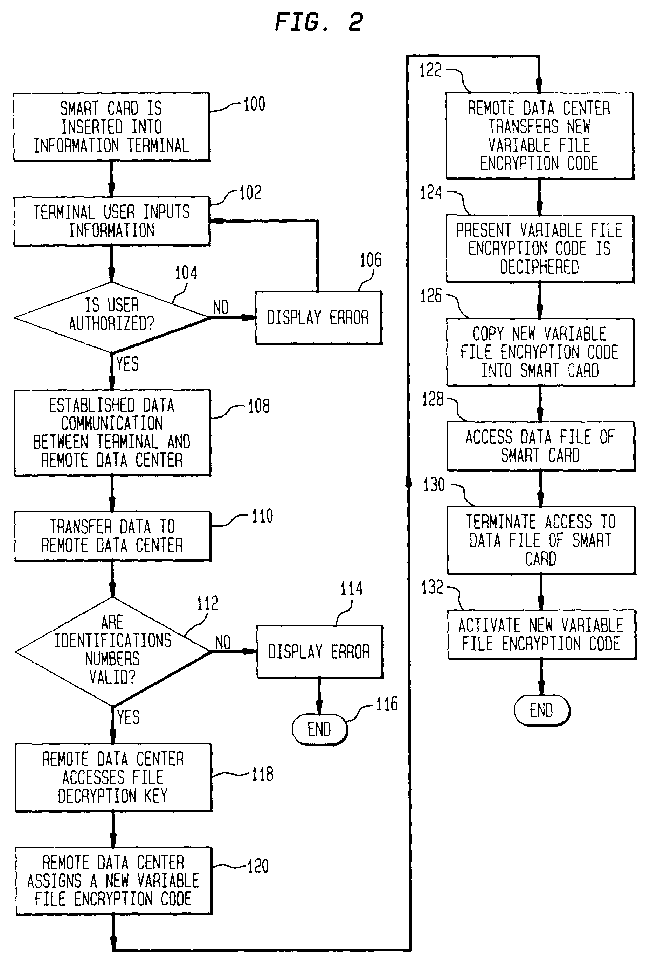

With the basic elements of system 10 being described above, discussion will now turn to its method of use with reference to Fig. 2 in conjunction with FIG. 1. First, a user of information terminal 14 inserts a smart card 16 into an information terminal 14, via input port 26 (step 100). The identification number 20 of smart card 16 is then loaded into the memory of the microprocessor 28 of information terminal 14. As previously mentioned, smart card 16 is then able to communicate with information terminal 14 through the electrical connection of the smart cards 16 vault microprocessor 18 with the microprocessor 28 of information terminal 14, via their respective data terminals. The terminal user then preferably enters a password into terminal 14, via input device 34, which password identifies the user to terminal 14 (step 102). The microprocessor 28 of terminal 14 then preferably determines if this is an authorized password (step 104). If no, an error message is displayed on monitor 32 (step 106) and the terminal user is once again asked to input a password (step 102). If the password is authorized, data communication between remote data center 12 and terminal 14 is established, via modems 38 and 40 (step 108).

Once data communication and the proper handshake is established between the remote data center 12 and information terminal 14, the respective identification number 30, 20 of terminal 14 and smart card 16 is transferred to remote data center 12 (step 110). The computer processor 42 of remote data center 12 then determines if the identification numbers 30, 20 of the information terminal 14 and smart card 16 are valid (step 112). If no, an error message is caused to be displayed on monitor 32 (step 114) and the smart card information retrieval process is caused to unsuccessfully terminate (step 116). For instance, some circumstances which could cause the identification numbers 30, 20 to be invalid are when the information terminal 14 or smart card 16 is reported stolen or lost, when an owner has been issued a new smart card, etc. In any event, it is to be understood that when a place of business (e.g., a hospital) desires to render an information terminal 14 inoperative, it simple informs the operator of remote data center 12 of its identification number 30, or information relating thereto, so as terminate service thereto. Similarly, when the owner of a smart card 16 desires to invalid its card 16, the owner simple contacts remote data center 12 and provides information identifying him or her as the true owner of the card 16 so as to invalidate it.

If the respective identification numbers 30, 20 of information terminal 14 and smart card 16 are determined valid, the computer processor 42 of remote data center 12 then determines the unique file decryption key 23 required to decipher the variable encryption code 22 (i.e., the encryption scheme) embedded in the data file 24 of smart card 16 to enable data access thereto (step 118). Preferably, the computer processor 42 of remote data center 12 utilizes a master key database 43 (e.g., a look-up table) that correlates the smart card identification number 20 with its present unique variable encryption code 22 and file decryption key 23. Additionally, in order to provide future security for the smart card 16, the computer processor 42 of remote data center 12 generates, and preferably updates its master key database 43, with a new variable encryption code 22' and accompanying deciphering file decryption key 23' for smart card 16 (step 120). Next, the file decryption key 23 for the present variable encryption code 22 of smart card 16, as well as the new variable encryption code 22', are transferred from remote data center 12 to the microprocessor 28 of information terminal 14 (step 122). Microprocessor 28 then transfers the file decryption key 23 to the vault microprocessor 18 of smart card 16 to enable microprocessor 18 to decipher the present variable encryption code 22 embedded in its data file 24 (step 124). Once the present variable encryption code 22 has been decrypted, the microprocessor 28 of information terminal 14 transfers the new variable encryption code 22' into the vault microprocessor 18 of smart card 16 (step 126). It is noted that even though a new variable encryption code 22' has been transferred into smart card 16, access to the stored data 24 therein will continue until the user of information terminal 14 completes the information transaction with smart card 16, after which the new variable encryption code 22' is embedded (e.g., activated) into the data file 24. In other words, the new variable encryption code 22' remains in a dormant state until embedded into the data file 24.

The user of information terminal 14 is now able to access the data file 24 of smart card 16, via microprocessors 18 and 28 (step 128). The stored information of data file 24 can be displayed on monitor 32 and/or printed on printer 36, both of which are associated with information terminal 14 as described above. Additionally, system 10 may be adapted such that the user of information terminal 14 may alter the data file 24 of smart card 16. For instance, in the present exemplary embodiment, the stored medical history in data file 24 regarding the owner of card 16 may be changed to indicate the presence of a new medical aliment (e.g., high blood pressure).

After the terminal user has performed the desired transactions with the data file 24 of smart card 16, the user terminates the information transaction process with smart card 16 through appropriate input to the microprocessor 28 of the information terminal 14 (step 130), via input device 34. The microprocessor 28 of information terminal 14 then communicates with and instructs the vault microprocessor 18 of card 16 to terminate access to the data file 24 and to activate (e.g., embed) the new variable encryption code 22' to prevent future access to the data file 24 in the absence of its deciphering file encryption key 23' (step 132). Thus, in order to gain future access to the stored personal data 24 of card 16, repetition of the above-described process is required with regard to the new variable encryption code 22' and file decryption key 23'.

It is to be appreciated that the smart card key management system 10 of the present invention is particularly advantageous in that each time access is sought for the personal data stored on a smart card, a unique deciphering algorithm (file decryption key) is required, which algorithm is exclusively stored in a secure remote vendor data center. Additionally, the owner of the smart card need not choose or remember any passwords (e.g., a PIN number) to enable access to the data stored on the smart card. For example, when the owner of a smart card is admitted to a hospital in an unconscious condition, the user of the hospital information terminal needs only to insert the smart card into the terminal to gain access to the stored medical data while the above-mentioned security features are constantly maintained by the remote vendor data center.

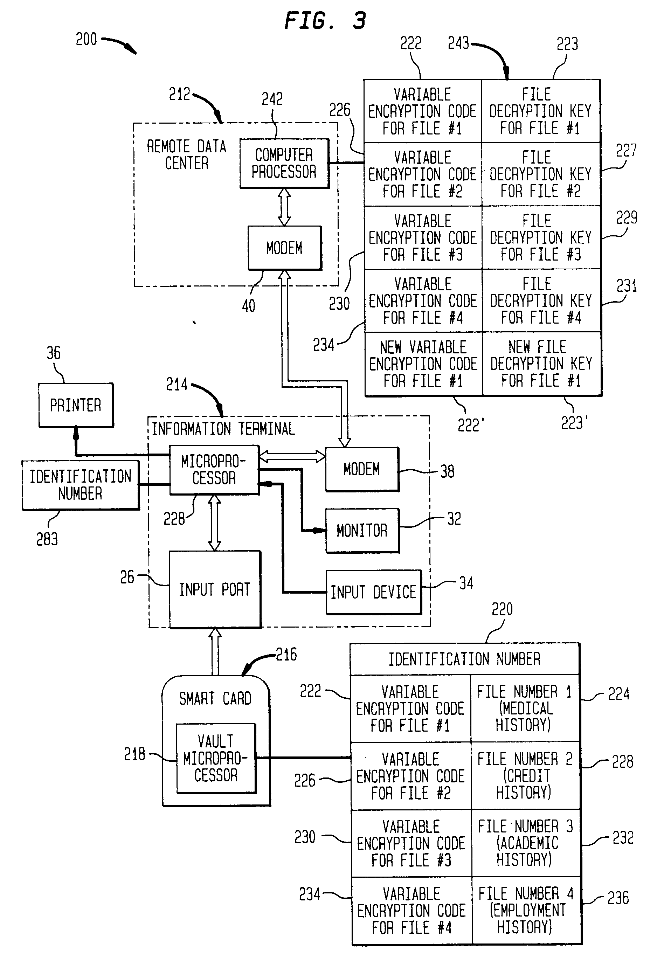

Referring now to Fig. 3, an alternative embodiment of the smart card key management system is shown generally at 200. System 200 is substantially similar to system 10 (Fig. 1) with the exception being that it is adapted for use with a universal smart card 216. Essentially, wherein smart card 20 of system 10 contained only a single data file 24 (e.g., medical history), universal smart card 216 contains a plurality of data files, each preferably pertaining to a different category of personal data. For instance, in the exemplary embodiment of FIG. 3, smart card 216 contains four independent data files 224, 228, 232 and 236 respectively containing: medical history, credit history, academic history and employment history. Of course smart card 216 is not to be understood to be limited to only these four categories of data, but rather may incorporate any number of data files regarding numerous categories of information.

Embedded into each independent data file 224, 228, 232 and 236 is a respective variable encryption code 222, 226, 230 and 234. As described above, each aforementioned variable encryption code is a unique encryption algorithm that prevents access to the data file it is embedded within in the absence of the required deciphering file decryption key. For instance, if data access is required for the data file 228 regarding credit history, the unique file encryption key 227 for its embedded encryption code 226 is required. It is noted that this file decryption key 227 will only decipher variable encryption code 226 and will not decipher the other encryption codes (e.g., 222, 230, 234), nor will it decipher the new variable encryption code, which is to replace the present variable encryption code 226 regarding the credit history data file 228.

The operation of remote data center 212 is substantially similar to that of remote data center 12 (Fig. 1) with the difference being that in order to selectively choose the proper file decryption key (or keys) to be transferred to information terminal 214, the computer processor 242 of the remote data base 212 preferably includes a master key database 243 (e.g., a look-up table) for each smart card 216, with each master key database 243 preferably containing each variable file encryption code 222, 226, . . 234 as well as its associated file decryption key 223, 227, . . . 231 for each smart card 216 of the system 200.

Regarding the information terminal 214 of system 200, its operation is similar to that of the information terminal 14 of system 10 (Fig. 1) with the exception being that it may be authorized by remote data center 212 to receive a file decryption key 223, 227,. . . 231 for more than one variable file encryption code 222, 226, . . . 234. That is, information terminal 214 or a user of information terminal 214, may be authorized to access more than one personal data file 224, 228, . . . 236 provided on a smart card 216.

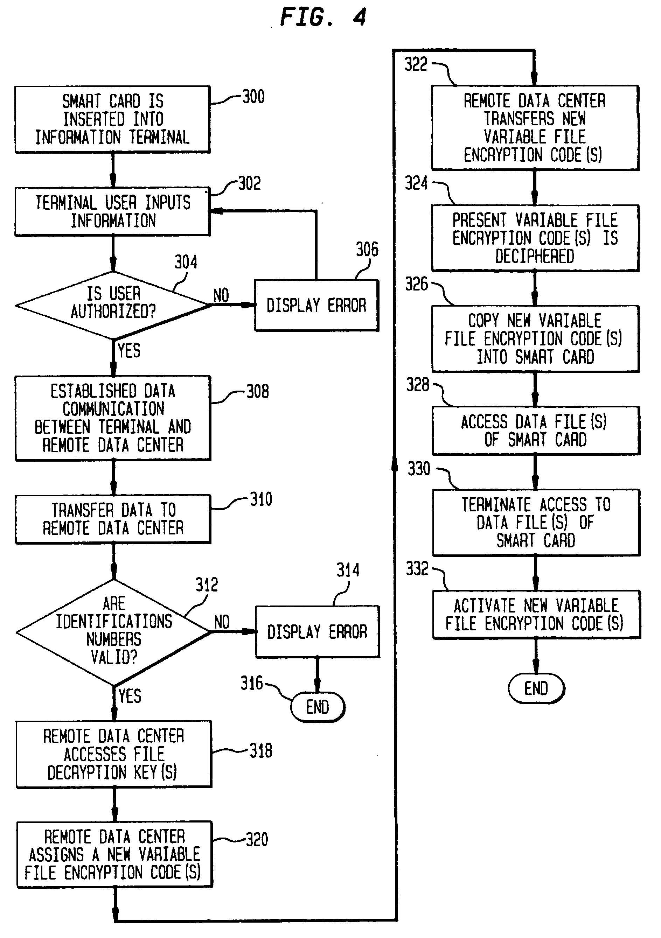

Referring to Fig. 4 in conjunction with Fig. 3, the method of use of system 200 will now be described. Steps 300 to 316 are to be understood to be substantial identical to steps 100 to 116 of Fig. 2, thus the above discussion relating thereto is to be incorporated herein. At step 318, when the remote data center 212 receives the identification number 283 of information terminal 214 a determination is made as to how many and which file decryption key(s) are to be transferred to information terminal 214. For example, a hospital possessing information terminal 214 may be authorized to access both the medical data file 224 and the credit history data file 228 of smart card 216. Therefore, its identification number 283 is authenticated by remote data center 212 such that remote data center 212 accesses the file decryption keys 223, 227 for the variable file encryption codes 222, 226 embedded in the data files containing medical and credit history (step 318).

The remote data center 212 then assigns new variable file encryption codes 222', 226' for the medical and credit history data files 224, 228 of smart card 216 (step 320). Next, the remote data center 212 causes the aforementioned file decryption keys 223, 227 and new dormant variable file encryption codes 222', 226' to be transferred to smart card 216 (step 322). The present variable file encryption codes 222, 226 regarding the medical and credit history data files 224, 228 are then deciphered by file decryption keys 223 and 227, respectively (step 324). The new dormant variable file encryption codes 222', 226' are then transferred and assigned to the medical and credit history data files 224 and 228, respectively (step 326). The medical and credit data files 224 and 228 are now accessible by information terminal 214, whereby data may be either read from or written into each data file 224, 228 (step 328).

After the user of information terminal 214 completes the data transactions with the medical and credit history data files 224, 228, the user terminates access thereto through appropriate input to the microprocessor 282 of information terminal 214, via input device 34 (step 330). The microprocessor 282 of information terminal 214 communicates with the vault microprocessor 218 of smart card 216, which in turn terminates access to the medical and credit data files 224, 228 and respectively embeds (e.g., activates) the new variable file encryption codes 222', 226' into the medical and credit history data files 224, 228 to prevent future access thereto in the absence of its accompanying deciphering file decryption keys 223', 227' (step 332).

Thus, the above-described system 200 of Fig. 3 has additional advantageous in that it is able to securely store a plurality of data files on a smart card and selectively choose which data files are to be accessed by a particular information terminal. As described above, a hospital may be able to access both medical and credit data files 224, 228, while an academic institution may be only able to access the academic data file 232 and an employer may access both the academic and employment data files 232, 236.

In summary, a smart card data retrieval system using key management techniques has been described. Although the invention has been described with emphasis on particular embodiments using key management techniques to secure data stored on a smart card, it should be understood that the figures are for illustration of exemplary embodiments of the invention and should not be taken as limitations or thought to be the only means of carrying out the invention. Further, it is contemplated that many changes and modifications may be made to the invention without departing from the scope and spirit of the invention as disclosed.

## Claims

1. A system for accessing data stored on a smart card, the smart card including a storage medium having at least one data file, the system comprising:
a first variable encryption code embedded in the at least one data file in the storage medium of the smart card;
an information terminal configured for reception of the smart card; and
a data center remote from the information terminal and adapted to electronically connect with the information terminal, the data center including a file decryption key capable of deciphering the first variable encryption code of the smart card, whereby the data center is adapted to electronically transmit the file decryption key to the smart card when the smart card is received in the information terminal and the information terminal is electronically connected to the data center whereby the file decryption key enables the information terminal to access stored data in the at least one data file of the smart card.

2. A system as recited in claim 1, wherein the data center is adapted to assign another variable encryption code and deciphering file decryption key for the at least one data file of the smart card and to transmit the another variable encryption code to the information terminal when access is sought for the data file of the smart card whereby the another variable encryption code is unique relative to the first variable encryption code.

3. A system as recited in claim 2, wherein the information terminal and the smart card are adapted to purge the first encryption code from the smart card and embed the another encryption code in the data file of the smart card upon termination of access to the data file of the smart card by the information terminal.

4. A system for accessing data stored on a smart card, the smart card including a storage medium having a plurality of data files, the system comprising:
a plurality of first variable encryption codes, each first variable encryption code being respectively embedded into one of the data files in the smart card wherein each first variable encryption code is unique relative to one another;
an information terminal configured for reception of the smart card; and
a data center remote from the information terminal and configured to electronically connect with the information terminal, the data center including a master key database having a plurality of file decryption keys, each file decryption key capable of deciphering one of the first variable encryption codes embedded in a respective data file of the smart code, whereby the data center is configured to electronically transmit at least one of the file decryption keys to the smart card when the smart card is received in the information terminal and the information terminal is electronically connected to the data center, whereby the at least one file decryption key enables the information terminal to access data stored in one of the plurality of data files of the smart card.

5. A system as recited in claim 4, wherein the data center is adapted to assign another variable encryption code and deciphering file decryption key for each data file and to transmit the another encryption code to the information terminal so as to be embedded into an accessed data file of the smart card.

6. A system as recited in claim 4 or 5, wherein the microprocessor of the information terminal includes a storage medium having an identification number that identifies the information terminal to the data center when the data center is electronically connected to the information terminal.

7. A system as recited in claim 6, wherein the storage medium of the smart card includes an identification number that identifies the smart card to the data center when the smart card is received in the information terminal and the information terminal is electronically connected to the data center.

8. A system as recited in claim 7, wherein the data center is configured to authorize electronic transmission to the information terminal upon authentication of the identification number of each of the information terminal and smart card.

9. A method for securing and retrieving data from a smart card, the method comprising the steps of:
providing a data center having a computer processor and a storage medium;
providing an information terminal remote from the data center and adapted to electrically connect to the data center and being configured for reception of the smart card;
providing the smart card with at least one data file;
embedding an encryption code in the at least one data file;
providing the data center with a decryption key that deciphers the encryption code embedded in the at least one data file;
transmitting the decryption key from the data center to the information terminal to decipher the encryption code embedded in the smart card;
accessing data from the data file of the smart card after the encryption code has been deciphered by the file decryption key;
embedding a new encryption code in the data file of the smart card upon termination of data access to the data file; and
storing a new deciphering decryption key for the new encryption code in the data center.

10. A method for securing and retrieving data from a smart card as recited in claim 9, further including the steps of:
providing the information terminal with a storage medium, the information terminal storage medium having a terminal identification number;
providing the smart card with a storage medium, the card storage medium having a card identification number;
transmitting the identification numbers of the information terminal and smart card to the data center;
determining in the data center if the terminal and card identification numbers are valid; and
transmitting the decryption key from the data center to the information terminal upon the validation of the terminal and card identification numbers.

11. A method for securing and retrieving data from a smart card as recited in claim 9 or 10, further including the steps of:
providing the smart card with a plurality of data files; and
embedding a first encryption code in each one of the data files, wherein each first encryption code is unique relative to one another.

12. A method for securing and retrieving data from a smart card as recited in claim 11, further including the steps of:
providing a master key database in the data center that includes a deciphering decryption key for each one of the first encryption codes, wherein each decryption key is unique relative to one another;
selectively transmitting at least one decryption key from the data center to the information terminal;
deciphering at least one of the encryption codes embedded in one of the plurality of data files with the at least one decryption key transmitted from the data center; and
accessing stored data in the one of the plurality of data files.

13. A method for securing and retrieving data from a smart card as recited in claim 12, further including the steps of:
determining a new encryption code for the accessed one of a plurality of data files;
determining and storing in the data center a deciphering decryption code for the new encryption code; and
embedding the new encryption code in the data file of the one of a plurality of data files upon termination of data access thereto.
